# EUROPEAN PATENT APPLICATION

(11) **EP 3 290 827 A1**
(43) Date of publication of application: **07.03.2018**
(21) Application number: 16186509.2
(22) Date of filing: 31.08.2016
(51) Int. Cl.: F25B 13/00, F25D 21/12, F24H 4/04

(54) **DEFROSTING WITHOUT REVERSING REFRIGERANT CYCLE**

(71) Applicant: Vaillant GmbH, 42859 Remscheid (DE)
(72) Inventor: Cruz, Santiago Cid, 01010 Vitoria (Araba) (ES)
(74) Representative: Hocker, Thomas

(57) **Abstract**

The present invention discloses a heat pump appliance including a refrigerant circuit operable in a plurality of modes to transfer heat between an exterior atmosphere and an interior atmosphere via a refrigerant. The refrigerant circuit includes a compressor for compressing the refrigerant, a first heat exchanger for transferring heat between the refrigerant and the interior atmosphere, a throttling device for lowering the pressure of the refrigerant, and a second heat exchanger for transferring heat between the refrigerant and the exterior atmosphere. Wherein, the first heat exchanger operates as a condenser to cool the refrigerant in a heating mode and operates as an evaporator to vaporize the refrigerant in a cooling mode, the second heat exchanger operates as an evaporator in the heating mode. The appliance further includes a third heat exchanger connected in the refrigerant circuit and positioned near the second heat exchanger. The third heat exchanger is selectively hydraulically communicated with the first heat exchanger for transferring heat released by the refrigerant at the first heat exchanger to the refrigerant at the third heat exchanger in a defrosting mode, thereby pre-heating the refrigerant entering the second heat exchanger. In this way, the heat energy condensed in the first heat exchanger can be partially used to defrost the coil-type second heat exchanger 14, so there is no need to reverse the refrigerant cycle in the defrosting mode.

## Description

### FIELD OF THE INVENTION

The present invention relates to a heat pump appliance, and more particularly to a heat pump appliance capable of defrosting an outdoor heat exchanger coil without reversing a refrigerant cycle.

### BACKGROUND OF THE INVENTION

Heat pumps are well known and used for heating and/or cooling building interiors and the like. A basic heat pump typically has a refrigerant circuit including a compressor, a condenser, an expansion valve, and an evaporator. A heat transfer medium (usually called a refrigerant) circulates in the refrigerant circuit to transfer heat from a first location to a second location. For an air-to-air heat pump, during a heating mode operation, outdoor air is used as a heat source, an outdoor heat exchanger acts as an evaporator and an indoor heat exchanger acts as a condenser. Thus, the refrigerant absorbs heat from exterior atmosphere through the evaporator and release heat to interior atmosphere via the condenser. Heat pumps are also designed so that operations can be reversed to transfer heat from the interior atmosphere to the exterior atmosphere in a cooling mode.

Outdoor heat exchangers usually take form of coil type heat exchangers. During a normal heating mode, an outdoor heat exchanger that is acting as an evaporator becomes colder than exterior atmosphere. When the exterior temperature is near or below the freezing point of water, moisture in the air gets frozen and turns to ice/frost building up on the coil of the outdoor heat exchanger. The formation of ice restricts the airflow across the coil, which causes heat energy absorbed from outdoor air to be reduced, thereby reducing the performance and efficiency of the heat pump appliance. In order to restore performance, the appliance will enter a defrosting mode. A common method of defrosting the outdoor coil is known as reversing the operation of the heat pump system from the heating mode to the cooling mode. The effect of such mode reversal is to direct the hot refrigerant discharged by the compressor directly to the outdoor coil to melt the ice until a temperature of the outdoor coil is raised to a predetermined value to ensure removal of all of ice.

Nevertheless, in the traditional defrosting mode, the indoor space heating has to be stopped, in addition, since the interior heat exchanger functions as an evaporator at this time, it extracts heat from interior atmosphere with the result that the interior temperature decreases, which will obviously reduce the interior thermal comfort, also, the temperature on the interior plate-to-plate heat exchanger can be decreased below 0 °C , which may cause a freezing risk of the heat exchanger. Moreover, on switching from the heating mode to the defrosting mode, reversing of the refrigerant cycle inevitably generates a pressure balance, and such pressure balance leads to a big noise, which obviously reduces comfort of users.

### SUMMARY OF THE INVENTION

It is an object of present invention to provide a heat pump appliance that can defrost outdoor heat exchanger coil without reversing a refrigerant cycle, thereby ensuring heating demands of the users in a defrosting mode.

According to one aspect of the present invention there is provided a heat pump appliance including a refrigerant circuit operable in a plurality of modes to transfer heat between an exterior atmosphere and an interior atmosphere via a refrigerant. The refrigerant circuit includes a compressor for compressing the refrigerant, a first heat exchanger for transferring heat between the refrigerant and the interior atmosphere, a throttling device for lowering the pressure of the refrigerant, and a second heat exchanger for transferring heat between the refrigerant and the exterior atmosphere. Wherein, the first heat exchanger operates as a condenser to cool the refrigerant in a heating mode and operates as an evaporator to vaporize the refrigerant in a cooling mode, the second heat exchanger operates as an evaporator in the heating mode. The appliance further includes a third heat exchanger connected in the refrigerant circuit and positioned near the second heat exchanger. The third heat exchanger is selectively hydraulically communicated with the first heat exchanger for transferring heat released by the refrigerant at the first heat exchanger to the refrigerant at the third heat exchanger in a defrosting mode, thereby pre-heating the refrigerant entering the second heat exchanger. In this way, the heat energy condensed in the first heat exchanger can be partially used to defrost the coil-type second heat exchanger 14, so there is no need to reverse the refrigerant cycle in the defrosting mode. Accordingly, heating demands of users can be ensured on defrosting, moreover, the freezing risk of the interior plate-to-plate heat exchanger can be reduced, furthermore, the noise generated in reversing of the refrigerant cycle can be avoided.

In one embodiment, the appliance includes a first fluid control valve connected between the first and the third heat exchangers.

Preferably, in the defrosting mode, when the refrigerant passes through the first heat exchanger and the third heat exchanger, the first fluid control valve is operable to allow a heat exchange fluid leaving form the first heat exchanger where it absorbs heat from the refrigerant to enter the third heat exchanger where it dissipates the absorbed heat to the refrigerant.

Preferably, the first fluid control valve is a three-way valve, and it has one port for being connected to a space heating/cooling circuit located outside of the appliance. The first fluid control valve is operable to communicate the first heat exchanger with the space heating/cooling circuit in the heating and the cooling modes for heating and cooling the interior atmosphere respectively.

In one embodiment, the appliance includes a second fluid control valve connected between the third heat exchanger and the space heating/cooling circuit to allow the heat exchange fluid leaving from the third heat exchanger to feed to the space heating/cooling circuit in the defrosting mode.

Preferably, the second fluid control valve is a three-way valve, and it has one port for being connected to a tank located outside of the appliance. The second fluid control valve is operable to hydraulically communicate the third heat exchanger with the tank in the cooling mode for allowing that, the heat exchange fluid absorbs heat dissipated by the refrigerant at the third heat exchanger and then enters the tank to release the heat to fluids stored in the tank. In this way, the third heat exchanger acts as a condenser in the cooling mode, and the condensation energy released at the third heat exchanger can be used to heat up the fluids within the tank, thereby recovering the heat energy in condensation.

In another embodiment, the appliance includes a second fluid control valve connected to the third heat exchanger, and the second fluid control valve is capable of being connected to a tank located outside of the appliance to allow that, a heat exchange fluid absorbs heat dissipated by the refrigerant at the third heat exchanger and then enters the tank to release the heat to fluids stored in the tank. In this way, the third heat exchanger acts as a condenser in the cooling mode, and the condensation energy released at the third heat exchanger can be used to heat up the fluids within the tank, thereby recovering the heat energy in condensation.

Preferably, the second heat exchanger is equipped with a blower to allow air flow to pass through the second heat exchanger in the heating mode for transferring heat available in the air flow to the refrigerant passing through the second heat exchanger; wherein the blower works at a minimum speed or stops running in the cooling mode.

Preferably, the second heat exchanger is equipped with a blower to allow air flow to pass through the second heat exchanger in the heating mode for transferring heat available in the air flow to the refrigerant passing through the second heat exchanger; wherein the blower stops running in the defrosting mode. By this means, the heat energy obtained by the refrigerant passing through the third heat exchanger can be fully used to melt all of ice formed on the second heat exchanger.

Preferably, the second heat exchanger is a coil type heat exchanger, and the first and the third heat exchangers are both plate-to-plate heat exchangers.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1A is a schematic diagram showing a heat pump appliance performing in a heating mode in accordance with a first embodiment of present invention, wherein the heat pump appliance is connected with a space heating/cooling circuit;
Fig. 1B is a schematic diagram showing the heat pump appliance of Fig. 1A performing in a defrosting mode;
Fig.2A is a schematic diagram showing a heat pump appliance performing in a heating mode in accordance with a second embodiment of present invention, wherein the heat pump appliance is connected with a space heating/cooling circuit and a fluid tank;
Fig.2B is a schematic diagram showing the heat pump appliance of Fig. 2A performing in a cooling mode;
Fig.2C is a schematic diagram showing the heat pump appliance of Fig. 2A performing in a defrosting mode.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

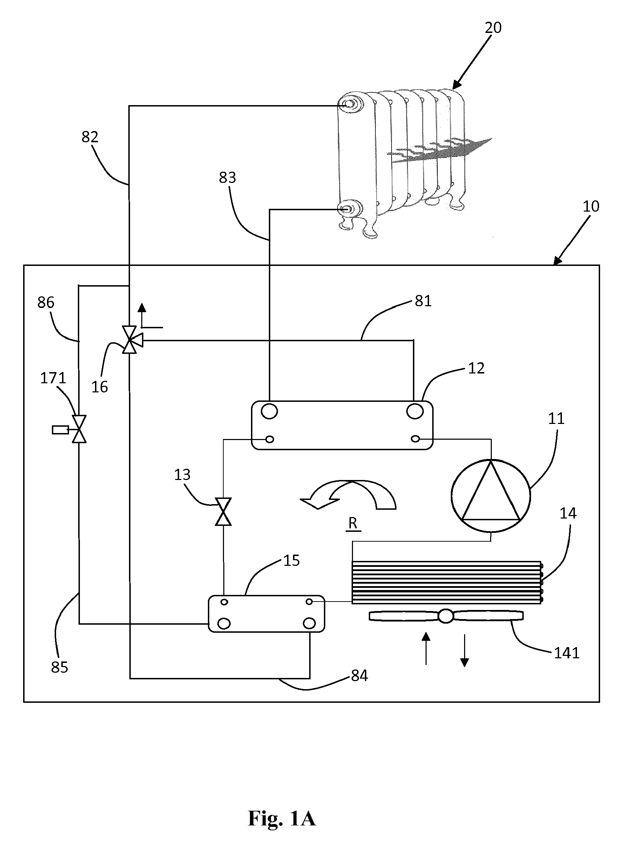

Refer to Fig. 1A, a heat pump appliance 10 according to a first embodiment of present invention is working in a heating mode for heating building interiors. The heat pump appliance 10 includes a refrigerant circuit R, a first fluid control valve 16, and a second fluid control valve 171. The refrigerant circuit R typically includes a compressor 11, a first heat exchanger 12 operating as a condenser, a throttling device 13, and a second heat exchanger 14 operating as an evaporator. The compressor 11 generally uses electrical power to compress a refrigerant from a low pressure gas state to a high pressure gas state thereby increasing the temperature, enthalpy and pressure of the refrigerant. The first heat exchanger 12 is placed in an indoor space and it can be a plate-to-plate heat exchanger. The refrigerant leaving from the compressor 11 flows through the first heat exchanger 12 for being condensed at a substantially constant pressure to a saturated liquid state. In this process, a heat exchange fluid, such as water is driven by a pump (not shown) to pass through the first heat exchanger 12 to obtain heat from the refrigerant flow. In this embodiment, the first fluid control valve 16 is a three-way valve connected to the first heat exchanger 12, and it has one port connected to a space heating/cooling circuit 20 located outside of the appliance 10. The space heating/cooling circuit 20 can be placed within a building (now shown) and allows hot or cold water acting as the heat transfer medium to pass therethrough for heating or cooling the building interiors. The hot heat exchange fluid leaving from the first heat exchanger 12 flows consecutively through a line 81, the first fluid control valve 16, a line 82, the space heating/cooling circuit 20, a line 83 and back to the first heat exchanger 12. During this circulation, the hot heat exchange fluid dissipates heat into the interior atmosphere via the space heating/cooling circuit 20 for heating building interiors.

The throttling device 13 can take form of an electronic expansion valve for being used to control the amount of the refrigerant entering into the second heat exchanger 14. The liquid refrigerant from the first heat exchanger 12 flows through the electronic expansion valve 13, result in the pressure of the liquid is decreased. In the process, the refrigerant evaporates partially causing the refrigerant to change to a mixed liquid-gas state, reducing its temperature down to a value that makes possible heat exchanges in the second heat exchanger 14. The heat pump appliance 10 further includes a third heat exchanger 15 connected in the refrigerant circuit R. The third heat exchanger 15 is positioned upstream of the second heat exchanger 14, preferably downstream of the throttling device 13. The third heat exchanger 15 can be a plate-to-plate heat exchanger, and it has one passageway connected in the fluid path of the refrigerant and the other passageway connected with the first and the second fluid control valves 16, 171. In this embodiment, the second fluid control valve 171 can be an electromagnetic on-off valve, and it is also connected to the space heating/cooling circuit 20 via lines 86, 82. In the heating mode, the first fluid control valve 16 is in a normal state when it blocks heat exchange fluid entering the third heat exchanger 15, and the second fluid control valve 171 is in a normal closed state when the fluid path between the third heat exchanger 15 and the space heating/cooling circuit 20 is blocked. As a result, the refrigerant leaving from the throttling device 13 passes through the third heat exchanger 15 without heat transfer and enters the second heat exchanger 14.

The second heat exchanger 14 is placed at an outdoor location, and it can be a coil type heat exchanger equipped with a blower 141 for blowing air flow to pass through the second heat exchanger 14, thereby transferring the heat energy available in the air flow to the refrigerant flow that evaporates inside from liquid to gas. The gas refrigerant discharged from the second heat exchanger 14 is sucked into the compressor 11 and repeats the refrigerant cycle for heating purpose. It is well known that the refrigerant circuit R can further include a reversing valve (not shown), like a four-way valve for inversion of the refrigerant cycle for cooling purpose. In a normal cooling mode, the first heat exchanger 12 operates as the evaporator, and the second heat exchanger 14 operates as the condenser. In the first heat exchanger 12 (evaporator), the heat exchange fluid, like water dissipates heat to the refrigerant for vaporizing the refrigerant, and the water becoming cold passes through the space heating/cooling circuit 20 for cooling the building interiors.

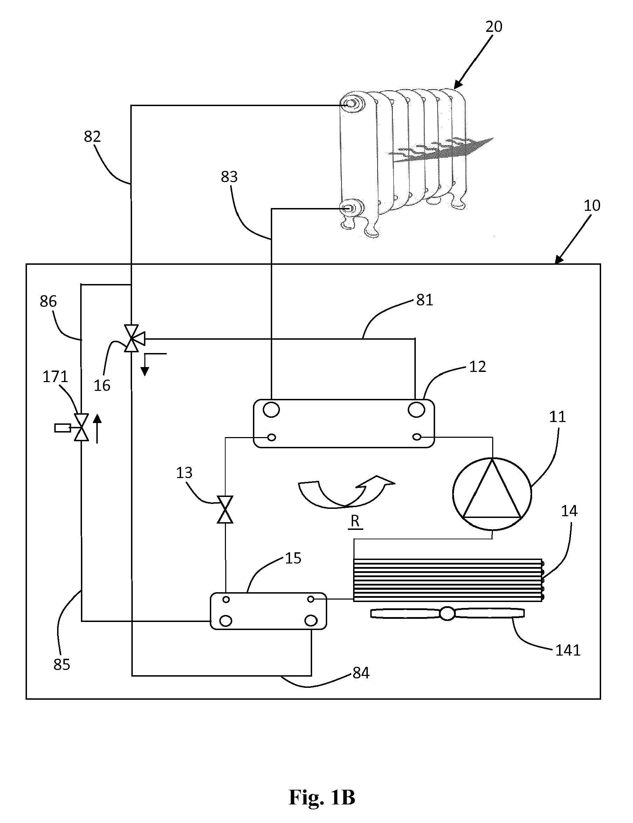

Refer to Fig. 1B, when the appliance 10 operates in a defrosting mode, the refrigerant circuit R is cycled same as in the heating mode, in other words, the refrigerant cycle would not be reversed. When the refrigerant passes through the first heat exchanger 12, as indicated by arrows in Fig. 1B, the first fluid control valve 16 is actuated to allow the heat exchange fluid to flow from the first heat exchanger 12 where the heat exchange fluid absorbs heat energy from the refrigerant to the third heat exchanger 15 via lines 81, 84, and the second fluid control valve 171 is activated on to allow the heat exchange fluid leaving form the third heat exchanger 15 where the heat exchange fluid dissipates part of heat energy to the refrigerant passing therethrough to enter the space heating/cooling circuit 20 via lines 85, 86, 82 for releasing rest of heat energy into the interior atmosphere, then the cooled heat exchange fluid returns to the first heat exchanger 12 via the line 83 to repeat the cycle. During the period, the refrigerant leaving form the third heat exchanger 15 with the obtained heat energy passes through the second heat exchanger 14, and in the meantime, the blower 141 stops running so that the heat energy can be fully used to melt all of ice formed on the coil of the outdoor heat exchanger (namely the second heat exchanger 14). In this way, the heat energy condensed in the first heat exchanger 12 can be partially used to defrost the coil-type second heat exchanger 14, so there is no need to reverse the refrigerant cycle when a defrosting is required. Accordingly, heating demands of users can be ensured on defrosting, moreover, the freezing risk of the interior plate-to-plate heat exchanger can be reduced, furthermore, the noise generated in reversing of the refrigerant cycle can be avoided. It should be noted that, in this defrosting mode, the third heat exchanger 15 performs as an evaporator instead of the second heat exchanger 14, so the electronic expansion valve 13 must be regulated by superheating to avoid the refrigerant being condensed into liquid in the coil-type second heat exchanger 14 before entering the compressor 11.

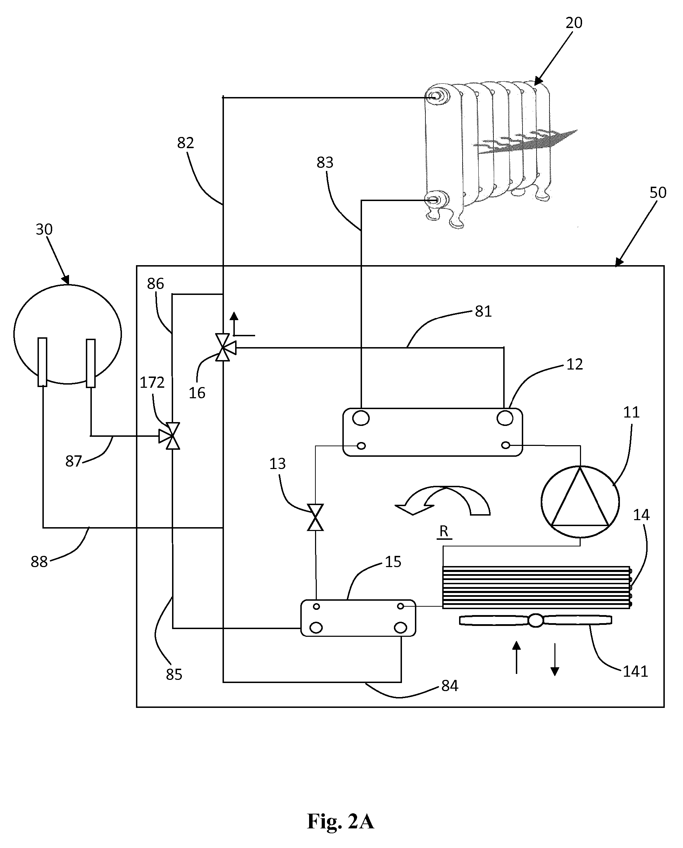

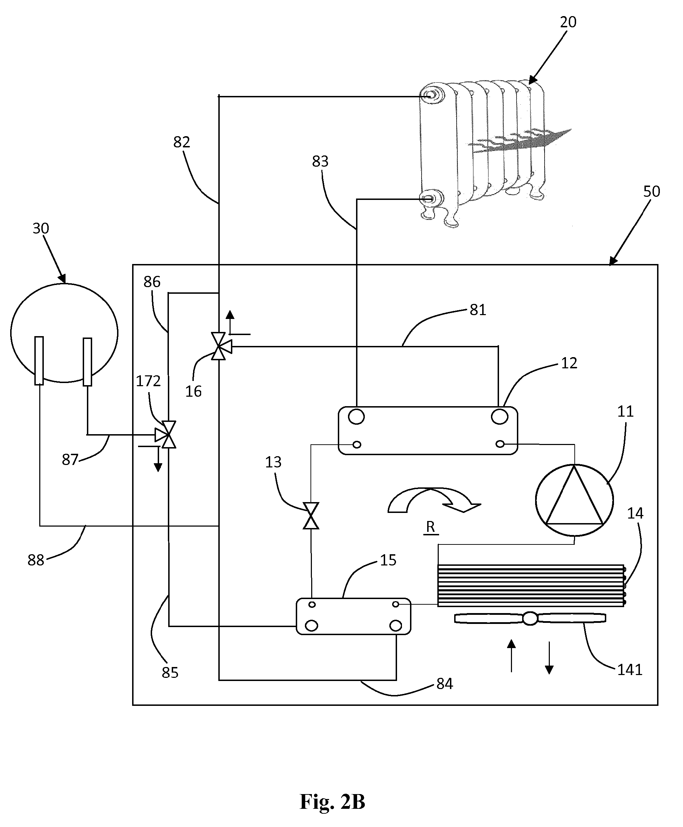

Fig. 2A shows a second embodiment of the heat pump appliance 50. Compared with the first embodiment, the main difference is that the second fluid control valve 172 is in form of a three-way valve, and it has one port connected to a tank 30 located outside of the appliance. Refer to Fig. 2B, when the heat pump appliance 50 works in a cooling mode, as indicated by arrows, the refrigerant cycle is reversed, and the heat exchange fluid is circulated between the first heat exchanger 12 acting as an evaporator now and the space heating/cooling circuit 20 for cooling the building interiors, and in the meantime, the second fluid control valve 172 is actuated to hydraulically communicate the third heat exchanger 15 with the tank 30. During the period, the blower 141 can run at a minimum speed or even stop running, and the third heat exchanger 15 performs as a condenser now. In this way, when hot refrigerant passes through the third heat exchanger 15, the heat exchange fluid obtains heat energy therein from the refrigerant, and flows through lines 84, 88 to enter the tank 30. The heat energy is then released to fluids (could be the same as the heat exchange fluid, like water) stored in the tank 30, and the heat exchange fluid further flows back into the third heat exchanger 15 via a line 87, the second fluid control valve 172, and the line 85. Compared with a traditional heat pump appliance working in the cooling mode, the condensation energy released at the third heat exchanger 15 can be used to heat up the fluids within the tank 30, thereby recovering the heat energy in condensation instead of dissipating it directly into the air via the blower 141. In some circumstance, if the temperature of fluids within the tank 30 is high, the capacity of condensation in the third heat exchanger 15 is not enough, in this case, the speed of the blower 141 has to be modulated to keep the condensation temperature within the compressor envelop limit.

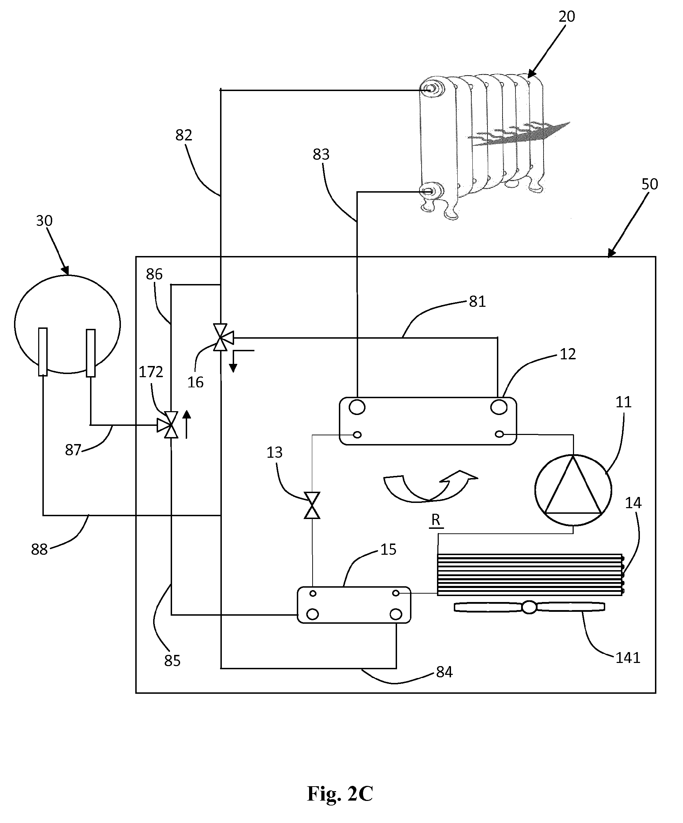

Refer to Fig. 2C, when the appliance 50 enters the defrosting mode, the refrigerant circuit R is cycled same as in the heating mode. The first fluid control valve 16 is actuated to allow the heat exchange fluid leaving from the first heat exchanger 12 where it obtains heat energy in condensation of the refrigerant to flow through lines 81, 84 and enter the third heat exchanger 15 where it releases part of heat energy to the refrigerant passing therethrough, and the second fluid control valve 172 is actuated to allow the heat exchange fluid exiting from the third heat exchanger 15 to pass through lines 85, 86, 82 and reach the space heating/cooling circuit 20 to release rest of the heat energy into the interior atmosphere for heating building interiors.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A heat pump appliance (10, 50) comprising:
a refrigerant circuit (R) operable in a plurality of modes to transfer heat between an exterior atmosphere and an interior atmosphere via a refrigerant, comprising a compressor (11) for compressing the refrigerant, a first heat exchanger (12) for transferring heat between the refrigerant and the interior atmosphere, a throttling device (13) for lowering the pressure of the refrigerant, and a second heat exchanger (14) for transferring heat between the refrigerant and the exterior atmosphere; said first heat exchanger operating as a condenser to cool the refrigerant in a heating mode and operating as an evaporator to vaporize the refrigerant in a cooling mode; said second heat exchanger operating as an evaporator in the heating mode; **characterized in that**
a third heat exchanger (15) is connected in the refrigerant circuit and positioned near the second heat exchanger, and said third heat exchanger is selectively hydraulically communicated with the first heat exchanger for transferring heat released by the refrigerant at the first heat exchanger to the refrigerant at the third heat exchanger in a defrosting mode, thereby pre-heating the refrigerant entering the second heat exchanger.

2. A heat pump appliance according to claim 1, **characterized in that** the appliance (10, 50) comprises a first fluid control valve (16) connected between the first and the third heat exchangers.

3. A heat pump appliance according to claim 2, **characterized in that**, in the defrosting mode, when the refrigerant passes through the first heat exchanger (12) and the third heat exchanger (15), the first fluid control valve is operable to allow a heat exchange fluid leaving form the first heat exchanger where it absorbs heat from the refrigerant to enter the third heat exchanger where it dissipates the absorbed heat to the refrigerant.

4. A heat pump appliance according to claim 3, **characterized in that** said first fluid control valve is a three-way valve, and it has one port for being connected to a space heating/cooling circuit (20) located outside of the appliance; said first fluid control valve is operable to communicate the first heat exchanger (12) with the space heating/cooling circuit (20) in the heating and the cooling modes for heating and cooling the interior atmosphere respectively.

5. A heat pump appliance according to claim 4, **characterized in that** the appliance (10, 50) comprises a second fluid control valve (171, 172) connected between the third heat exchanger (15) and the space heating/cooling circuit (20) to allow the heat exchange fluid leaving from the third heat exchanger to feed to the space heating/cooling circuit in the defrosting mode.

6. A heat pump appliance according to claim 5, **characterized in that** said second fluid control valve (172) is a three-way valve, and it has one port for being connected to a tank (30) located outside of the appliance; said second fluid control valve is operable to hydraulically communicate the third heat exchanger with the tank in the cooling mode for allowing that, the heat exchange fluid absorbs heat dissipated by the refrigerant at the third heat exchanger and then enters the tank to release the heat to fluids stored in the tank.

7. A heat pump appliance according to claim 1, **characterized in that** the appliance (50) comprises a second fluid control valve (172) connected to the third heat exchanger, and said second fluid control valve is capable of being connected to a tank (30) located outside of the appliance to allow that, a heat exchange fluid absorbs heat dissipated by the refrigerant at the third heat exchanger and then enters the tank to release the heat to fluids stored in the tank.

8. A heat pump appliance according to claims 6 or 7, **characterized in that** said second heat exchanger (14) is equipped with a blower (141) to allow air flow to pass through the second heat exchanger in the heating mode for transferring heat available in the air flow to the refrigerant passing through the second heat exchanger; wherein said blower works at a minimum speed or stops running in the cooling mode.

9. A heat pump appliance according to claim 1, **characterized in that** said second heat exchanger (14) is equipped with a blower (141) to allow air flow to pass through the second heat exchanger in the heating mode for transferring heat available in the air flow to the refrigerant passing through the second heat exchanger; wherein said blower stops running in the defrosting mode.

10. A heat pump appliance according to claim 1, **characterized in that** the second heat exchanger (14) is a coil type heat exchanger, and the first and the third heat exchangers are both plate-to-plate heat exchangers.
